# EUROPEAN PATENT SPECIFICATION

(11) **EP 4 191 712 B1**
(45) Date of publication and mention of the grant of the patent: **25.11.2026**
(21) Application number: 22215116.9
(22) Date of filing: 28.03.2017
(51) Int. Cl.: H01M 4/62, H01M 10/12, H01M 10/04, H01M 50/119, H01M 50/133

(54) **BATTERY ASSEMBLY TECHNIQUES**
BATTERIEANORDNUNGSTECHNIKEN
TECHNIQUES D'ASSEMBLAGE DE BATTERIE

(30) Priority: 16.09.2016 US 201662395594 P
(43) Date of publication of application: 07.06.2023
(62) Document number(s) of the earlier application(s) in accordance with Art. 76 EPC: 17851206.7 / 3 513 445
(73) Proprietor: Wisk Aero LLC, Mountain View, CA 94043 (US)
(72) Inventor: MELACK, John, Mountain View (US); MUNIZ, Thomas P., Mountain View (US); MURTHY, Nihal, Mountain View (US)
(74) Representative: WP Thompson

(56) References cited:
- EP-A1- 0 240 915
- WO-A1-91/11035
- JP-A- 2005 190 748

## Description

### CROSS REFERENCE TO OTHER APPLICATIONS

This application claims priority to U.S. Provisional Patent Application No. 62/395,594 entitled BATTERY SUBMODULE AND ASSEMBLY TECHNIQUES filed September 16, 2016.

### BACKGROUND OF THE INVENTION

Proper battery assembly is integral to producing safe, high quality battery packs. Placing a plurality of pouch cells into a battery case while maintaining compression on the cells may be required during battery assembly. A method that is automated may improve upon the assembly process. Additional design features which reduce friction between the plurality of pouch cells and the battery case may improve upon the assembly process.

JP 2005 190748 A describes a method of inserting an electrode group for a storage battery into a container.

EP 0240915A1 describes a method for producing battery plate sets, in which separator sheets made of glass fleece are cut to size and, after being folded around a positive grid plate, are glued to form pockets. A predetermined compressive tension is maintained in the plate set by means of bands placed around, whereupon the plate sets are then inserted into an accumulator housing.

WO 91/11035 A1 describes a method of making a lead-acid battery, which includes providing continuous lengths of end separator stock and intermediate separator stock and stacks of positive and negative plates. The separators are individually severed from the continuous length of stock and sequentially formed into an assembly with the individual positive and negative plates. The assembly zone moves linearly relative to the cutting stations of the respective continuous lengths of separator stock and the stacks of plates and facilitates sequential establishment of the assembly without intermediate storage of the individual separators and elements. Some or all of the separators may be supplied from stacks disposed in magazines. The apparatus includes equipment for supplying continuous lengths of end separator stock and intermediate separator stock and positive and negative plate stacks. A movable assembly zone is adapted to receive the individual separators and plates from which the assembly may be introduced into a battery cell container.

### SUMMARY

According to an aspect of the present invention, there is provided a battery assembly system according to the claims.

### BRIEF DESCRIPTION OF THE DRAWINGS

Various embodiments of the invention are disclosed in the following detailed description and the accompanying drawings.
Figure 1 A is a diagram illustrating an embodiment of a battery.
Figure IB is a diagram illustrating an embodiment of a battery from a top view.
Figure 2 is a diagram illustrating an embodiment of a sealed battery.
Figure 3 A is a diagram illustrating an embodiment of a battery assembly system.
Figure 3B is a diagram illustrating an embodiment of a battery assembly system before compression.
Figure 3C is a diagram illustrating an embodiment of a battery assembly system in the process of compression.
Figure 3D is a diagram illustrating an embodiment of a removal of a stacking fixture.
Figure 3E is a diagram illustrating an embodiment of insertion in a can.
Figure 4A is a diagram illustrating an embodiment of a battery assembly system before insertion in a can.
Figure 4B is a diagram illustrating an embodiment of a battery assembly system during insertion in a can.
Figure 5 is a flow diagram illustrating an embodiment of a battery assembly process.
Figure 6 is a diagram illustrating an embodiment of a battery comprising low friction cell covers.
Figure 7 is a diagram illustrating an embodiment of a low friction band.
Figure 8 is a diagram illustrating an embodiment of a low friction band.
Figure 9 is a flow diagram illustrating an embodiment of a battery assembly process.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

A battery assembly method and system are disclosed. The battery assembly method comprises stacking a plurality of battery cells to create a stack of battery cells and compressing the stack of battery cells. Compressing the stack of battery cells comprises exerting pressure on a first external layer of the stack of battery cells using a plurality of pneumatic cylinders. A first portion of the stack of battery cells is released from the plurality of pneumatic cylinders while a second portion of the stack of battery cells remains compressed by the plurality of pneumatic cylinders. The first portion of the stack of battery cells is inserted in a can. The battery cells may retain compression while being inserted in the can. The process may repeat until the stack of battery cells is fully inserted in the can. The battery assembly system carries out the battery assembly method. In some embodiments, the stack of battery cells comprises insulation, conductors, or both in addition to cells. A plurality of pneumatic cylinders may exert pressure on a second external layer of the stack of battery cells.

In some embodiments, the battery assembly system enables a battery to be assembled efficiently and accurately. A battery may require compressing layers of cells and other contents before inserting them in a fully sealed case (e.g. a can). The battery assembly system may decrease friction and resistance typical in inserting one or more of the following: battery cells, insulation, or conductors, in the can. An apparatus comprising pneumatic cylinders may be used to compress the battery cells. The pneumatic cylinders may allow the battery cells to be inserted portion by portion into the can, wherein portions of the battery cells that are not near the opening of the can remain compressed by the pneumatic cylinders. In some embodiments, the battery cells are compressed while held in a stacking fixture. The stacking fixture is removed following compression and the battery cells are inserted in the can. In some embodiments, pneumatic cylinders are installed on structures that move the cylinders in a direction perpendicular to the cylinders' active direction (e.g. the direction in which the cylinders exert pressure), allowing the cylinders to drop the battery cells into the can. In various embodiments, various configurations of friction decreasing materials may be used such as cell covers or bands. Banding may also serve to compress the cells and enable easier insertion into the can.

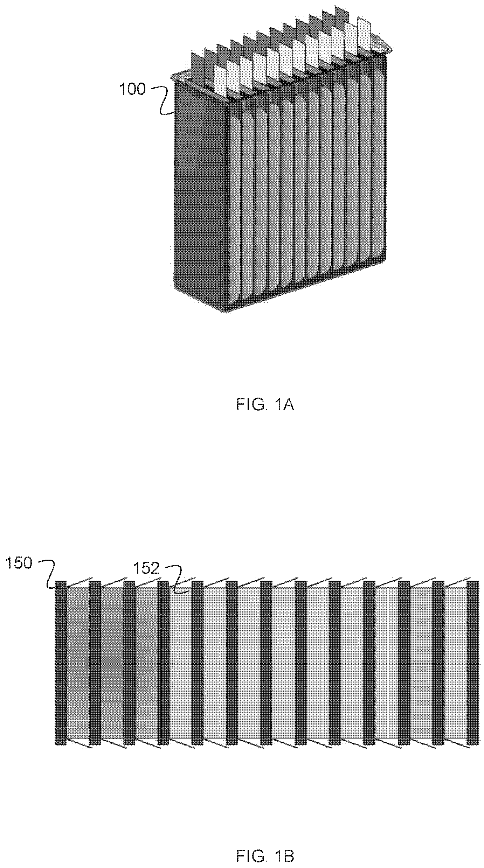

Figure 1A is a diagram illustrating an embodiment of a battery. The battery assembly system may be used to assemble various types of batteries. Battery 100 illustrates an embodiment of a battery assembled by the system. The battery as shown comprises stacked components enclosed in a sealed can assembly. The can may be used as a heat sink and may comprise aluminum or any other appropriate material. The can may be sealed to the battery pack structure. The can may comprise an opening wherein the battery cells are inserted. In some embodiments, a cover is placed at the can's opening after the battery cells are inserted to create a fully sealed battery.

Figure 1B is a diagram illustrating an embodiment of a battery from a top view. Alternating layers of the battery components are shown. Thermal runaway propagation prevention features are built into the battery design.

A battery cell stack may comprise non-cell layers. Thermal insulation, conductors, and cells may be stacked in the can. Layers of cells may be placed in between layers of insulation. Insulation layer 150 may comprise an aerogel, fiberglass, fiberglass infused with aerogel, or any appropriate insulating material. The insulation shown in this embodiment is a compressible material. In some embodiments, aluminum fins are placed in between cells. The fins may provide thermal contact. Cell layer 152 may comprise a liquid electrolyte. In some embodiments, the battery assembly system aligns the stacked layers of the battery and fits the stacked and aligned layers into the can. The components of the battery may be required to be compressed and tightly secured in the can.

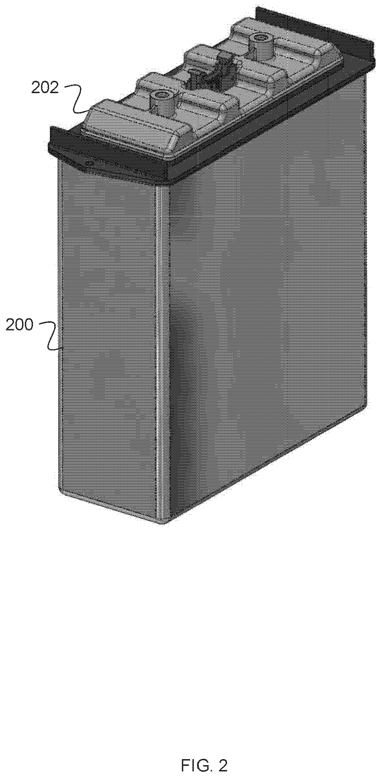

Figure 2 is a diagram illustrating an embodiment of a sealed battery. Cover 202 is sealed to can 200. The diagram shows an embodiment of a final assembled battery. Can 200 may comprise an impact extruded can. Cells are stacked in the can. In some embodiments, the can is made of 1070 T0 aluminum. The can has 0.024" wall thickness and 1/16" bottom thickness. The can has a flanged top for sealing. After assembly, the can may be compressed for proper cell compression.

The can may be plastically formed in a fixture to provide specified cell compression (e.g., 3PSI). The insulation may act as a spring to provide a specified cell compressive force. The compression may secure the cells (e.g., no load on the tabs) and improve cell cycle life. The battery assembly system may be required to compress the battery component stack in order to insert it into the can.

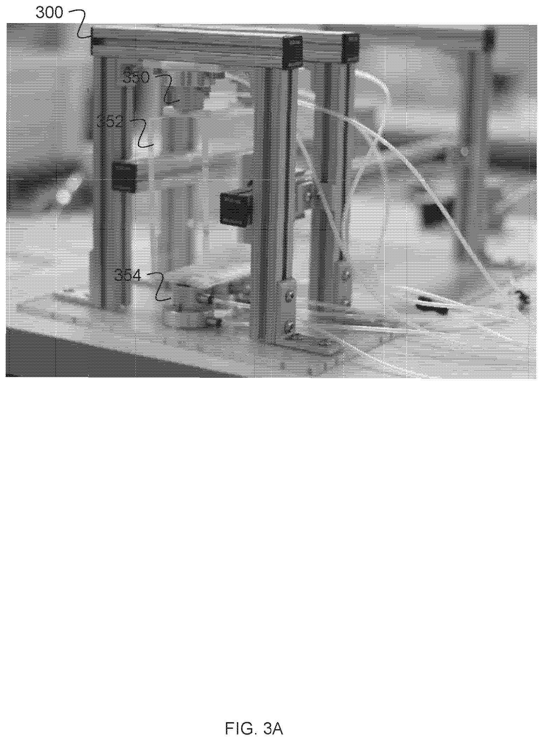

Figure 3A is a diagram illustrating an embodiment of a battery assembly system. In the example shown, system 300 comprises stacking fixture 352, pneumatic cylinder 350, and pneumatic cylinder 354. Stacking fixture 352 may comprise plastic, glass, polytetrafluoroethylene, polyoxymethylene, Delrin ^{®}, or any appropriate material that does not bind to a battery case.

Various configurations of stacking fixtures may be used. The stacking fixture may be used to align or maintain alignment of the layers of the battery during compression. As shown, stacking fixture 352 is a rectangular prism shape with open panels. The stacking fixture may comprise two parallel vertical panels. In various embodiments, the stacking fixture comprises one connected apparatus or multiple moving components. The battery assembly system may comprise interchangeable parts. For example, a user may choose between various stacking fixture configurations. The stacking fixture may comprise a frame or case based on the shape of the plurality of battery cells or layers. For example, the stacking fixture may fit the dimensions of stack of battery cells. The stack of battery cells may comprise insulating or conducting layers in addition to cells.

Pneumatic cylinder 350 as shown is positioned above the battery cells and pneumatic cylinder 354 is positioned below the battery cells. Layers of the battery (e.g. cells, insulation, or conductors) may be stacked in the stacking fixture. The pneumatic cylinders may be used to exert pressure on the top and bottom battery layers, compressing the cells of the battery. In some embodiments, multiple pneumatic cylinders are used to compress the cells from both sides. For example, multiple pneumatic cylinders may press down on the top of the cell stack while multiple pneumatic cylinders exert pressure on the bottom of the cell stack.

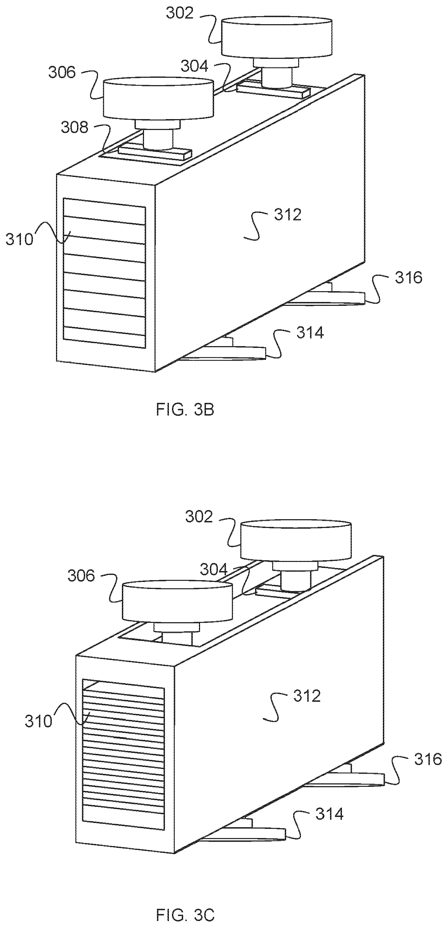

Figure 3B is a diagram illustrating an embodiment of a battery assembly system before cell compression. In the example shown, stacking fixture 312 is one piece. The shape of the stacking fixture comprises two rectangular panels that are appended to a hollow rectangular prism. Cells 310 are stacked in the stacking fixture. Cells 310 may comprise the layers of the battery, including any non-cell layers.

The two solid side panels may be used to prevent cells or layers of the battery from sliding out of position. The hollow rectangular prism at one end of the stacking fixture may be used to align the battery cells. In the example shown, pneumatic cylinders 302 and 306 press down upon components 308 and 304 respectively. Components 308 and 304 may be designed to evenly press down upon the battery cells. For example, they may be evenly spaced across the topmost layer or their lengths may be equal to the exposed width of the topmost layer of the battery cell stack. The components may be semi-permanently attached to the pneumatic cylinders. Pneumatic cylinders 314 and 316 may also similarly compact the battery cell stack from below.

Figure 3C is a diagram illustrating an embodiment of a battery assembly system in the process of battery compression. In the example shown, pneumatic cylinders 302 and 306 push down on the top layer of battery cells 310. Battery cells 310 are compressed compared to the previous position in Figure 3B. Pneumatic cylinders 314 and 316 have advanced the bottom layer of battery cells 310 upwards compared to the previous position in Figure 3B. Battery cells 310 are compacted smaller than the dimensions of stacking fixture 312. Following compression, the stacking fixture may be removed.

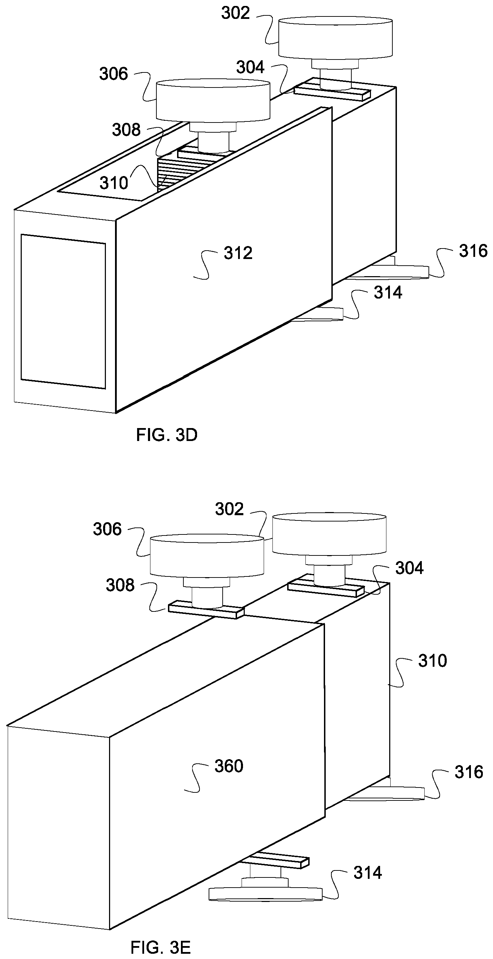

Figure 3D is a diagram illustrating an embodiment of a removal of a stacking fixture. Following compression, stacking fixture 312 may be removed from its hollow rectangular prism side. The stacking fixture may slide easily off of the compacted battery cells. As shown, stacking fixture 312 is halfway removed from battery cells 310. Pneumatic cylinders 306, 302, 314, and 316 remain in contact with and compress battery cells 310.

Figure 3E is a diagram illustrating an embodiment of insertion into a can. The assembly system may compress the cells of the battery into a compact shape that is able to slide into a can. The system may solve the difficult assembly step of transferring cells from a fixture to the can. As shown, can**360** is slid on to battery cells 310. As the can is advanced, the nearest pneumatic cylinders are retracted. In various embodiments, the can is advanced towards the stack of battery cells or the stack of battery cells is advanced towards the can. Other pneumatic cylinders may remain in position, compressing the battery cells, until the can is advanced to the pneumatic cylinders. As shown, battery cells 310 are halfway inserted in can**360**. Pneumatic cylinders 306 and 314 are retracted. Pneumatic cylinders 302 and 316 remain in contact with the battery cells. In some embodiments, 6, 10, or any appropriate number of pneumatic cylinders may be utilized.

In some embodiments, a first portion of the stacked battery cells is released from pneumatic cylinders prior to being inserted in the can. For example, pneumatic cylinders 306 and 314 may be released before the can is advanced on the first portion of the stacked battery cells. In some embodiments, a portion of the stacked battery cells is inserted prior to being released by the pneumatic cylinders. For example, can **360** may be advanced up to component 304. After advancing the can, pneumatic cylinders 302 and 316 may release the portion of the stacked battery cells.

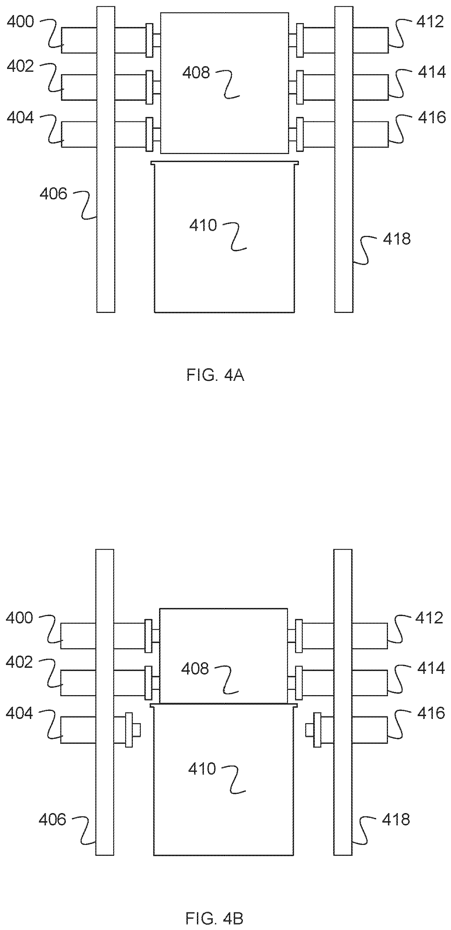

Figure 4A is a diagram illustrating an embodiment of a battery assembly system before insertion in a can. A battery assembly system may simultaneously compress the battery cells and insert them into a can. In the example shown, battery cells 408 are lowered into can 410. Battery cells 408 are compressed between pneumatic cylinders. Pneumatic cylinders 400, 402, and 404 are supported by structure 406 and exert pressure on one side of the battery cells. Pneumatic cylinders 412, 414, and 416 are supported by structure 418 and exert pressure on an opposite side of the battery cells. Compressing the battery cells while inserting them into a can may allow the battery cells to be inserted quickly or preserve alignment of the cells.

Figure 4B is a diagram illustrating an embodiment of a battery assembly system during insertion in a can. Battery cells 408 are partially inserted into can 410. Pneumatic cylinders 400, 402, and 404 may be moved up and down via structure 406. In various embodiments, the structure, the pneumatic cylinders, or both the structure and pneumatic cylinders may be repositioned to lower the battery into the can. Pneumatic cylinders 412, 414, and 416 may similarly move up and down via structure 418. As the battery cells as lowered, pneumatic cylinders nearest the can may retract. The pneumatic cylinders may be retracted in pairs. As shown, pneumatic cylinders 404 and 416 are retracted. The portion of the battery cells that were compressed by pneumatic cylinders 404 and 416 are inserted in the can. The battery cells may be lowered one portion of the battery cells at a time. The battery cells that are not yet in the can may remain compressed by pneumatic cylinders. For example, pneumatic cylinders 400, 402, 412, and 414 as shown compress battery cells 408. The final portion of the battery cells may be firmly pushed into the can. The battery assembly system may allow the battery cells to remain actively compressed for as long as possible during insertion of the cells into the can.

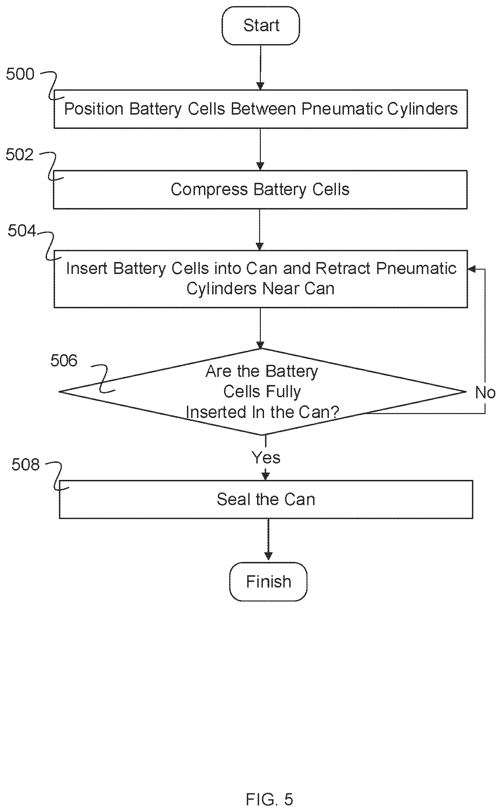

Figure 5 is a flow diagram illustrating an embodiment of a process for battery assembly. In some embodiments, the compression and insertion of the battery cells occur simultaneously. A combination compression and insertion apparatus may be used.

In 500, the battery cells are positioned between pneumatic cylinders. In 502, the battery cells are compressed. In 504, the battery cells are inserted into a can and pneumatic cylinders near the can are retracted. For example, the pneumatic cylinders that are closest to an opening in the can may be retracted. In 506, it is determined whether the battery cells are fully inserted into the can. In the event the battery cells are determined to be fully inserted into the can, in 508 the can is sealed. Sealing the can may comprise inserting a top plate comprising a thermistor, cell interconnects, or latches. A tab cover may be sealed over the top plate using an adhesive or solvent bond. Following 508, the process is finished. In the event the battery cells are determined to be not fully inserted into the can, the process returns to 504.

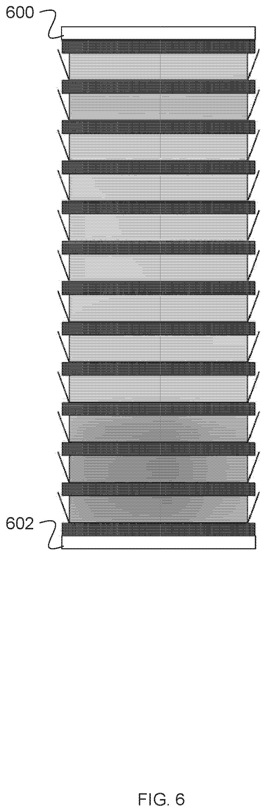

Figure 6 is a diagram illustrating an embodiment of a battery comprising low friction cell covers. The battery may comprise components that enable the battery to be assembled efficiently. In some embodiments, the battery cell stack may bind to the can or create friction as it is inserted. For example, insulating layers made with aerogel (e.g. fiberglass infused with aerogel) may be binding, causing uneven insertion into the can. Low friction cell covers may allow the battery cells to slide easily into a can. Low friction cell covers may be placed as the first and final layers of the battery cell stack. The low friction cell covers may comprise a slippery material, such as a plastic, polytetrafluoroethylene, polyoxymethylene, Delrin ^{®}, or any other appropriate material. The low friction cell cover may comprise insulating properties to prevent melting or fire. For example, the low friction cell cover may comprise a slick material with an insulating coating such as intumescent paint. Intumescent materials may provide energy absorption due to phase change. Intumescent paint or additives may be used. As shown, low friction cell covers 600 and 602 are placed on either end of the stacked battery cells.

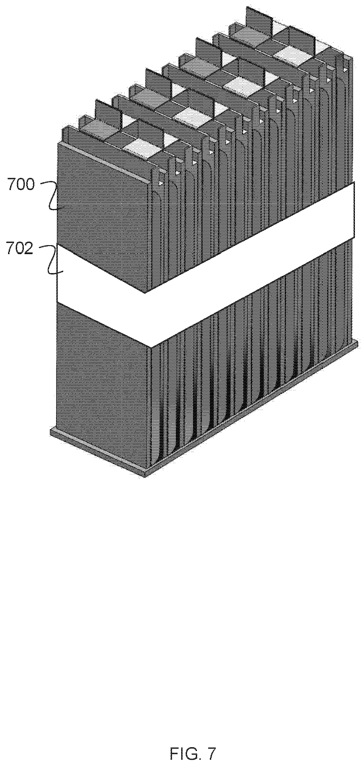

Figure 7 is a diagram illustrating an embodiment of a low friction band. A low friction band may compress a battery cell stack and allow it to be inserted into a can smoothly. In the example shown, low friction band 207 is wrapped around battery cells 700. Low friction band 207 may comprise a low friction material such as a plastic, polytetrafluoroethylene, polyoxymethylene, Delrin ^{®}, or any appropriate material. The low friction material may be coated in an insulating material such as intumescent paint. In some embodiments, the low friction band compresses the battery cell stack. The low friction may band may enable the battery cells to maintain compression and also slide easily into the can. The low friction band or low friction cell covers may be applied manually or automatically to the battery cells. For example, an off the shelf banding machine may be used.

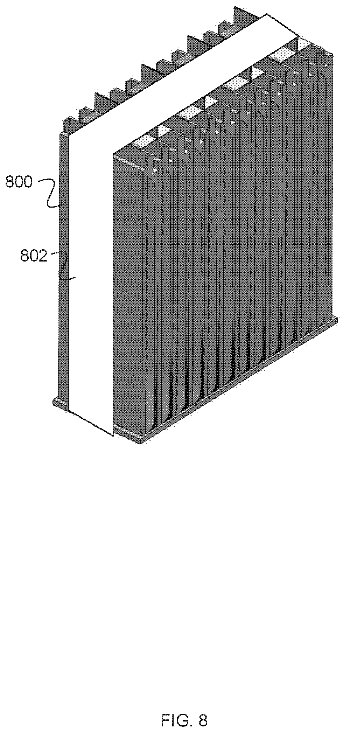

Figure 8 is a diagram illustrating an embodiment of a low friction band. As shown, low friction band 802 is wrapped around battery cells 800. The low friction band as shown is wrapped vertically around the battery cells. In some embodiments, wrapping the band vertically allows metal fins on either side of the battery layers to efficiently disperse heat from the battery. Wrapping the band vertically may also allow additional low friction material to be present on the first and last stacks of the band compared to wrapping the band horizontally around the battery cells. In some embodiments, a low friction band is an extension of low friction cell covers. For example, the low friction cell covers may continue to loop around the entire stack of battery cells.

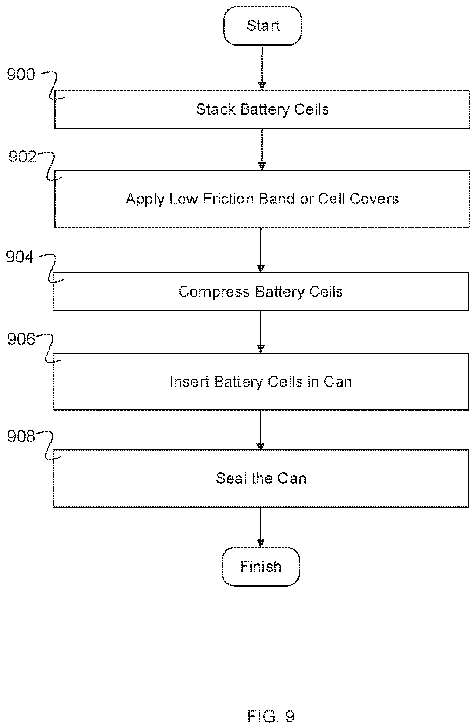

Figure 9 is a flow diagram illustrating an embodiment of a battery assembly process. In 900, the battery cells are stacked. In 902, a low friction band or cell covers are applied. Various friction decreasing components may be used separately or in combination. For example, a horizontal low friction band may be used in addition to low friction cell covers. In 904, the battery cells are compressed. In some embodiments, the battery cells are compressed using a low friction band. In some embodiments, an apparatus dedicated to compression is used. In 906, the battery cells are inserted into a can. In 908, the can is sealed.

In some embodiments, a low friction decreasing component is removed after battery cells are inserted in the can. For example, low friction cell covers may be removed from the can after battery cells are inserted in the can.

In various embodiments, a friction decreasing component and assembly apparatus are used in combination or separately. For example, a battery cell stack may be compressed using a stacking fixture and inserted into a can without extra friction decreasing measures. Following compression using the apparatus of Figure 3B, the compressed battery cells may be sealed with a band. The battery cells may then be removed from the pneumatic cylinders and inserted in a can.

In some embodiments, the battery assembly system is automated. The system may comprise an interface and processor. Desired specifications such as compression level, number of pneumatic cylinders used, spacing of pneumatic cylinders, speed of assembly, or any other appropriate factor may be provided to the system via the interface. For example, the user may specify how fast the battery is dropped or how fast the pneumatic cylinders are retracted. Stacking the battery cells, inserting the battery cells into a can, and/or sealing the can may be automated.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A battery assembly system, comprising:
a stacking fixture (312), wherein a plurality of battery cells (310) are stacked in the stacking fixture to create a stack of battery cells; and
a plurality of pneumatic cylinders (302, 306, 314, 316) configured to:
exert pressure on an external layer of the stack of battery cells while the stack of battery cells is in the stacking fixture,
release a first portion of the stack of battery cells while a second portion of the stack of battery cells remains compressed, and
insert the first portion of the stack of battery cells in a can (410).

2. The battery assembly system of claim 1, wherein the stack of battery cells comprises insulation, conductors, or both insulation and conductors.

3. The battery assembly system of claim 1 wherein the battery assembly system is configured to seal the can after the stack of battery cells is fully inserted in the can.

4. The battery assembly system of claim 1, wherein the stacking fixture is further configured to maintain an alignment of the plurality of battery cells.

5. The battery assembly system of claim 1, wherein the stacking fixture comprises a frame based on a shape of the plurality of battery cells.

6. The battery assembly system of claim 1, wherein the battery assembly system is configured to add a cell cover or band comprising a low friction material to the stack of battery cells prior to inserting the stack of battery cells in the can.

7. The battery assembly system of claim 6, wherein the battery assembly system is further configured to remove the cell cover or band following insertion of the stack of battery cells in the can.

8. The battery assembly system of claim 6, wherein the low friction material is coated in an insulating material.

9. The battery assembly system of claim 6, wherein the band compresses the stack of battery cells.

10. The battery assembly system of claim 1, wherein the stacking fixture comprises a rectangular prism with one or more open panels.

11. The battery assembly system of claim 1, wherein the stacking fixture comprises two rectangular panels appended to a hollow rectangular prism.

12. The battery assembly system of claim 1, further comprising:
a supporting structure coupled to the plurality of pneumatic cylinders configured to support the plurality of pneumatic cylinders.

13. The battery assembly system of claim 1, wherein the stacking fixture comprises at least one open panel, wherein the plurality of pneumatic cylinders are configured to compress the stack of battery cells by exerting pressure on the external layer of the stack of battery cells through the at least one open panel of the stacking fixture.

## Patentansprüche

1. Batterieanordnungssystem, umfassend:
eine Stapelhalterung (312), wobei eine Vielzahl von Batteriezellen (310) in der Stapelhalterung gestapelt werden, um einen Stapel von Batteriezellen zu erzeugen; und
eine Vielzahl von Pneumatikzylindern (302, 306, 314, 316), die konfiguriert sind zum:
Ausüben von Druck auf eine äußere Schicht des Stapels von Batteriezellen, während der Stapel von Batteriezellen in der Stapelhalterung ist,
Freigeben eines ersten Abschnitts des Stapels von Batteriezellen, während ein zweiter Abschnitt des Stapels von Batteriezellen komprimiert bleibt, und
Einsetzen des ersten Abschnitts des Stapels von Batteriezellen in ein Gehäuse (410).

2. Batterieanordnungssystem nach Anspruch 1, wobei der Stapel von Batteriezellen Isolierung, Leiter oder sowohl Isolierung als auch Leiter umfasst.

3. Batterieanordnungssystem nach Anspruch 1, wobei das Batterieanordnungssystem konfiguriert ist, um das Gehäuse zu versiegeln, nachdem der Stapel von Batteriezellen vollständig in das Gehäuse eingesetzt wurde.

4. Batterieanordnungssystem nach Anspruch 1, wobei die Stapelhalterung ferner so konfiguriert ist, um eine Ausrichtung der Vielzahl von Batteriezellen aufrechtzuerhalten.

5. Batterieanordnungssystem nach Anspruch 1, wobei die Stapelhalterung einen Rahmen umfasst, der auf einer Form der Vielzahl von Batteriezellen basiert.

6. Batterieanordnungssystem nach Anspruch 1, wobei das Batterieanordnungssystem konfiguriert ist, um dem Stapel von Batteriezellen vor dem Einsetzen des Stapels von Batteriezellen in das Gehäuse eine Zellabdeckung oder ein Band, umfassend ein reibungsarmes Material, hinzuzufügen.

7. Batterieanordnungssystem nach Anspruch 6, wobei das Batterieanordnungssystem ferner konfiguriert ist, um die Zellabdeckung oder das Band nach dem Einsetzen des Stapels von Batteriezellen in das Gehäuse zu entfernen.

8. Batterieanordnungssystem nach Anspruch 6, wobei das reibungsarme Material mit einem isolierenden Material beschichtet ist.

9. Batterieanordnungssystem nach Anspruch 6, wobei das Band den Stapeln von Batteriezellen komprimiert.

10. Batterieanordnungssystem nach Anspruch 1, wobei die Stapelhalterung ein rechteckiges Prisma mit einer oder mehreren offenen Paneelen umfasst.

11. Batterieanordnungssystem nach Anspruch 1, wobei die Stapelhalterung zwei rechteckige Seitenpaneele umfasst, die an einem hohlen rechteckigen Prisma angebracht sind.

12. Batterieanordnungssystem nach Anspruch 1, ferner umfassend:
eine Stützstruktur, die mit der Vielzahl von Pneumatikzylindern gekoppelt ist und konfiguriert ist, um die Vielzahl von Pneumatikzylindern zu stützen.

13. Batterieanordnungssystem nach Anspruch 1, wobei die Stapelhalterung mindestens ein offenes Paneel umfasst, wobei die Vielzahl der Pneumatikzylinder konfiguriert sind, um den Stapel von Batteriezellen zu komprimieren, indem sie durch das mindestens eine offene Paneel der Stapelhalterung Druck auf die äußere Schicht des Stapels von Batteriezellen ausüben.

## Revendications

1. Système d'assemblage de batterie, comprenant :
un appareil d'empilement (312), une pluralité de cellules de batterie (310) étant empilées dans l'appareil d'empilement pour créer une pile de cellules de batterie ; et
une pluralité de vérins pneumatiques (302, 306, 314, 316) conçus pour :
exercer une pression sur une couche externe de la pile de cellules de batterie pendant que la pile de cellules de batterie se trouve dans l'appareil d'empilement,
libérer une première partie de la pile de cellules de batterie pendant qu'une deuxième partie de la pile de cellules de batterie reste comprimée, et
insérer la première partie de la pile de cellules de batterie dans une boîte (410).

2. Système d'assemblage de batterie selon la revendication 1, dans lequel la pile de cellules de batterie comprend une isolation, des conducteurs, ou à la fois une isolation et des conducteurs.

3. Système d'assemblage de batterie selon la revendication 1, le système d'assemblage de batterie étant conçu pour sceller la boîte après que la pile de cellules de batterie a été entièrement insérée dans la boîte.

4. Système d'assemblage de batterie selon la revendication 1, dans lequel l'appareil d'empilement est en outre conçu pour maintenir un alignement de la pluralité de cellules de batterie.

5. Système d'assemblage de batterie selon la revendication 1, dans lequel l'appareil d'empilement comprend un cadre basé sur une forme de la pluralité de cellules de batterie.

6. Système d'assemblage de batterie selon la revendication 1, le système d'assemblage de batterie étant conçu pour ajouter un couvercle ou une bande de cellule comprenant un matériau à faible coefficient de frottement à la pile de cellules de batterie avant l'insertion de la pile de cellules de batterie dans la boîte.

7. Système d'assemblage de batterie selon la revendication 6, le système d'assemblage de batterie étant en outre conçu pour retirer le couvercle ou la bande de cellule suite à l'insertion de la pile de cellules de batterie dans la boîte.

8. Système d'assemblage de batterie selon la revendication 6, dans lequel le matériau à faible coefficient de frottement est revêtu dans un matériau d'isolation.

9. Système d'assemblage de batterie selon la revendication 6, dans lequel la bande comprime la pile de cellules de batterie.

10. Système d'assemblage de batterie selon la revendication 1, dans lequel l'appareil d'empilement comprend un prisme rectangulaire pourvu d'un ou plusieurs panneaux ouverts.

11. Système d'assemblage de batterie selon la revendication 1, dans lequel l'appareil d'empilement comprend deux panneaux rectangulaires joints à un prisme rectangulaire creux.

12. Système d'assemblage de batterie selon la revendication 1, comprenant en outre :
une structure de support accouplée à la pluralité de vérins pneumatiques conçue pour soutenir la pluralité de vérins pneumatiques.

13. Système d'assemblage de batterie selon la revendication 1, dans lequel l'appareil d'empilement comprend au moins un panneau ouvert, la pluralité de vérins pneumatiques étant conçue pour comprimer la pile de cellules de batterie en exerçant une pression sur la couche externe de la pile de cellules de batterie par l'intermédiaire du ou des panneaux ouverts de l'appareil d'empilement.
